# EUROPEAN PATENT SPECIFICATION

(11) **EP 3 824 140 B1**
(45) Date of publication and mention of the grant of the patent: **28.09.2022**
(21) Application number: 19749459.4
(22) Date of filing: 18.07.2019
(51) Int. Cl.: B65D 65/46, B65D 77/20, B65D 85/32, D21J 3/00

(54) **BIODEGRADABLE AND COMPOSTABLE FOOD PACKAGING UNIT FROM A MOULDED OR FLUFF PULP MATERIAL WITH A LAMINATED MULTI-LAYER, AND METHOD FOR MANUFACTURING SUCH FOOD PACKAGING UNIT**
BIOLOGISCH ABBAUBARE UND KOMPOSTIERBARE LEBENSMITTELVERPACKUNGSEINHEIT AUS EINEM GEFORMTEN ODER FLOCKIGEN ZELLSTOFFMATERIAL MIT EINER LAMINATMULTISCHICHT UND VERFAHREN ZUR HERSTELLUNG SOLCH EINER LEBENSMITTELVERPACKUNGSEINHEIT
UNITÉ D'EMBALLAGE ALIMENTAIRE BIODÉGRADABLE ET COMPOSTABLE OBTENUE À PARTIR D'UN MATÉRIAU DE PÂTE MOULÉ OU EN FLOCONS À MULTICOUCHE STRATIFIÉ, ET PROCÉDÉ DE FABRICATION D'UNE TELLE UNITÉ D'EMBALLAGE ALIMENTAIRE

(30) Priority: 19.07.2018 NL 2021355; 30.11.2018 NL 2022111; 13.03.2019 NL 2022734
(43) Date of publication of application: 26.05.2021
(73) Proprietor: Huhtamaki Molded Fiber Technology B.V., 8938 AN Leeuwarden (NL)
(72) Inventor: KUIPER, Harald John, 8445 SC Heerenveen (NL); TIMMERMAN, Jan Hendrik, 7696 BD Brucht (NL)
(74) Representative: Arnold & Siedsma
(86) International application number: PCT/NL2019/050458
(87) International publication number: WO 2020/017968

(56) References cited:
- EP-A1- 2 141 191
- WO-A1-2007/140538
- WO-A1-2014/064340
- WO-A1-2018/067006
- WO-A2-2011/158240

## Description

The present invention relates to food packaging units from a moulded or fluff pulp material. Such food packaging unit may relate to cases, boxes, cups, plates, carriers, sip lids etc.

Packaging units that are made from a moulded pulp material are known. Such moulded pulp or fluff pulp often originates from recycled paper material and/or virgin fibres. These packaging units are used to store, transport and/or display a range of product, including food products such as eggs, tomatoes, kiwi's.

WO 2014/064340 A1 discloses a method for manufacturing biodegradable packaging material, biodegradable packaging material and a package or a container made thereof.

Packaging units that come into contact with food products are subject to many restrictions. This often requires providing an additional film layer on or in the packaging unit, with the film layer acting as a barrier. This barrier separates the food product from the moulded pulp material of the packaging unit.

One of the problems with such food packaging units comprising an additional film layer is that the packaging units are often not sustainable, or at least not fully sustainable. Furthermore, this use of an additional film layer also puts restrictions on the recycling possibilities.

The present invention has for its object to obviate or at least reduce the above stated problems in conventional food packaging units and to provide a food packaging unit that is more sustainable and/or has improved recycling possibilities.

For this purpose, the present invention provides a food packaging unit from a moulded or fluff pulp material according to claim 1.

The food packaging unit according to the invention comprises a compartment capable of receiving or carrying or holding a food product. For example, a food receiving compartment may relate to a compartment capable of holding a food product, such as eggs, tomatoes, kiwis, or a container for holding a beverage. A carrying compartment may relate to a carrier surface whereon or wherein a food product can be placed, such as a plate, cup, bowl, bottle divider etc. In other embodiments according to the invention, the food receiving compartment is capable of receiving and holding a meal, for example ready meals, salads etc.

In the context of this invention degradable relates to degradation resulting in loss of properties, while biodegradable relates to degradation resulting from the action of microorganisms such as bacteria, fungi and algae. Compostable relates to degradation by biological process to yield CO₂, water, inorganic compounds and biomass.

The food packaging unit according to the invention is preferably compostable thereby providing a sustainable packaging unit. This provides a biodegradable alternative material to conventionally used plastics, for example. This improves recycling properties of the packaging units that are made from moulded or fluff pulp (including so-called virgin fiber material and/or recycled fiber material) and comprise a biodegradable laminated multi-layer. In several of the presently preferred embodiments of the invention the packaging unit is also marine degradable, thereby further improving the sustainability of the packaging unit.

According to the invention the food packaging unit comprises a biodegradable laminated multi-layer. This laminated multi-layer is in some of the presently preferred embodiments of the invention provided on or at a food contact surface of the food receiving and/or carrying compartment. In some other embodiments of the invention the laminated multi-layer is provided in the moulded or fluff pulp material of the food receiving and/or carrying compartment.

According to the present invention the laminated multi-layer comprises at least 5 material layers. It will be understood that additional layers can also be provided in accordance to the present invention. The inner and outer cover layer comprise an amount of a biodegradable aliphatic polyester, such as PBS, PHB, PHA, PCL, PLA, PGA, PHBH and PHBV. The inner and outer cover layer may also comprise a biodegradable composition of materials, such as a combination of starch and one of the aforementioned biodegradable aliphatic polyesters, such as PBS and/or PLA. This improves the surface properties of the laminated multi-layer, and the packaging unit provided therewith. This includes the so-called wipeability of the packaging unit. Wipeability relates to the possibility to remove stains from the surface and reducing or even preventing penetration into the material. Also, it may provide more possibilities for masking (hiding) undesirable stains and/or promoting the compostable effect of the packaging unit. The surface properties also relate to grease resistance such that the (chemical properties) of the packaging unit can be remained during its use, for example. Also, the penetration of oil originating from the food product, such as pasta or French fries, into the food packaging unit can be reduced. Also, water barrier properties can be improved to reduce the penetration of water into the packaging unit and thereby reducing ridging problems, for example.

In addition, the laminated multi-layer comprises a functional central layer comprises a biodegradable and compostable vinyl alcohol polymer. This function layer contributes to the multi-layer properties, such as acting as a gas barrier. For example, the functional layer may provide an effective O₂ barrier. This improves shelf-file of the food product(s) in the packaging unit.

In a presently preferred embodiment the vinyl alcohol polymer comprises a highly amorphous vinyl alcohol polymer, such as HAVOH, and/or butandiol vinyl alcohol co-polymer (BVOH). Such polymer or polymer mixture also provides an effective barrier, especially a gas barrier, and more specifically an oxygen barrier. Such barrier can effectively be used to further improve the shelf-life of the food product(s). In addition, this also reduces food waste, thereby further improving the sustainable effects of the food packaging unit according to the present invention. Experiments showed a surprisingly effective O₂ barrier, especially at relative humidities up to 60% as compared to conventional materials. An example of BVOH is G-Polymer.

As a further advantage, vinyl alcohol polymers are mouldable and extrudable. This renders it possible to co-extrude the laminated multi-layer with the basic material of the packaging unit, especially the basic material of the compartment(s), such as the moulded or fluff pulp material. The co-extruded material can be moulded or deepdrawn. This provides efficient and effective manufacturing processes for the packaging unit of the present invention. The efficiency can even be improved further by recycling the remainders after punching the material into the manufacturing process.

The inner and outer cover layers are separated from the central functional layer by an intermediate layer, to which can also be referred to as a tie layer. Such intermediate layer is substantially of a biodegradable material and connects and/or seals its adjacent layers. Preferably, the intermediate layers improve or at least contribute to maintaining the desired properties of the central functional layer, such as acting as a gas barrier. For example, the intermediate layers seal the central functional layer against liquid penetration to maintain the gas barrier properties of the functional layer.

It will be understood that additional separate layers can be provided in the laminated multi-layer, providing 7, 9 or 11 layers of material improving the overall properties of the laminated multi-layer, for example including grease barrier and odor barrier.

It was shown that by applying a laminated multi-layer the overall properties of the packaging unit were improved. In fact, the packaging unit with a laminated multi-layer enables the compartment to hold different kinds of food, including ready meals with pastasauce for example.

The combination of the barrier properties and the wipeability of the laminated multi-layer in a packaging unit according to the invention enables the use of these packaging units for a wide range of food products, including meat packaging, for example. In fact, the packaging unit of the invention substantially prevents stains in the product caused by hemoglobin contained in the meat. This improves the visual appearance of the product and the shelf-life of the product.

Furthermore, the packaging unit according to the present invention is compostable. This reduces waste and provides a more sustainable packaging of food products.

According to the present invention the packaging unit with the food receiving and/or carrying compartment is manufactured from a moulded or fluff pulp material. In a presently preferred embodiment the laminated multi-layer is co-extruded with the moulded pulp material and thereafter deep-drawn into the desired shape of the packaging unit. In another presently preferred embodiment the laminated multi-layer is provided in an in-mould operation, preferably in combination with an in-mould drying operation. As a further alternative the laminated multi-layer is laminated on the moulded or fluff pulp material, optionally comprising one or more of: deepdrawing with underpressure/vacuum, heating, providing overpressure at the top side. The multi-layer according to the invention showed effective capabilities of being deep-drawn in the packaging unit. In alternative embodiments (raw) fluff pulp material is used that preferably comprises long fibre softwoods. After pre-treatment the fluff pulp material is provided for the air-laid flow. To provide the fluff pulp material to the mould a binder may be used, for example as a spray or foam. This reduces the amount of water that is used in the manufacturing process for a conventional moulded fiber (packaging) product. In fact, in conventional moulded pulp products water is used as a carrier. Obviating the need for water as a carrier significantly reduces the amount of water that is required in the manufacturing process. This results in a significant reduction of the energy that is required for drying the resulting products. Also, this significantly reduces the carbon footprint of the end-products that are manufactured according to the method of the present invention. By providing the fluff pulp material to a mould a 3-dimensional shaped product can be manufactured. To provide the laminated multi-layer to the fluff pulp one or more of the aforementioned or other process steps can be applied including co-extruding and laminating. The air-laid processing step preferably also includes so-called spun-laid processing. In a presently preferred embodiment of the invention the barrier layer is provided to the 3-dimensional shaped mould. This renders it possible to manufacture the product from a fluff pulp material and the laminated multi-layer with a barrier material in one mould. This improves efficiency of the manufacturing process. Furthermore, providing the fluff pulp material and barrier material in the same mould and performing a heat and/or pressing/pressure treatment improves adherence of the materials. This provides additional strength and stability to the end-product.

In one of the presently preferred embodiments the laminated multi-layer with functional barrier layer is provided as an intermediate layer between two layers of fluff or moulded pulp material. In this embodiment the barrier layer is sort of encapsulated by the layers of fluff or moulded pulp material. Optionally, further layers are provided to further enhance the properties and characteristics of the end-product.

In a presently preferred embodiment of the invention the laminated multi-layer with functional barrier layer is provided on one side of the product, i.e. the food contact surface of the compartment. This may reduce the overall wall thickness of the end-product as compared to an embodiment with encapsulated barrier layer.

Preferably, the material of the packaging unit is sufficiently refined to further enhance the desired characteristics. Especially, applying a refining energy of about 150 kWh/ton material showed a good effect. As a further effect, an overall weight reduction of the packaging unit can be achieved of up to about 20% without affecting the strength and stability of the packaging unit as compared to conventional products, such as CPET or PP trays or the like. Optionally, additional additives can be added to further improve the packaging unit properties. For example, an amount of AKD can be provided to improve the water repellence.

As a further advantage, the packing unit with the laminated multi-layer renders it possible to provide the packing unit with a paper look and paper feel. This improves consumer perceptance of the packing unit.

An even further advantage when applying a laminated multi-layer is the insulating effect that is provided to the food packaging unit. This is especially relevant in case of instant meals that are heated in a magnetron, for example conventional packaging units heat up to a temperature of 90-100°C with the similar packaging unit that is provided with a laminated multi-layer heating up to 50-70°C. This improves the safety of using such meals. Experiments showed that it was possible to achieve a temperature resistance of the packing units up to 200°C and even up to 220°C. This improves the so-called "cool-to-touch" characteristic of the packaging unit. This prevents a consumer from being injured when removing a packaging unit from the oven. More specifically, "cool-to-touch" relates to an outside packaging temperature in the range of 10-30 °C after heating the product in an oven, for example. This is a lower temperature as compared to conventional CPET packaging units, for example. Therefore, the packaging unit according to the invention is more safe in use.

As an even further advantage, the packaging unit with the laminated multi-layer maintains the biodegradability and/or compostable properties of the packaging unit as it obviates the need for the use of fluorochemicals as is required in conventional packaging units, for example in the production of disposable tableware. The production of disposable tableware is for example the production of Chinet disposable tableware. Therefore, the packaging unit according to the present invention improves the sustainability of handling food products. In fact, this enables decomposing the food packaging unit as a whole. In such preferred embodiment, the food packaging unit can be decomposed at home, thereby rendering the food packaging unit home-compostable. Such home-compostable packaging unit further improves the overall sustainability of the packaging unit of the invention. This enables replacing the use of less sustainable materials, such as CPET, PP, PE, PS, aluminium in food packaging units.

A further advantage of providing a packaging unit with the multi-layer according to the present invention is the possibility to apply modified atmosphere conditions in the packaging unit. The barrier properties preferably act in both directions, from outside to the inside, and from the inside to the outside. This enables so-called MAP-products that may further improve shelf-life, for example.

In a presently preferred embodiment the laminated multi-layer is a co-extruded laminated multi-layer. Co-extrustion enables constructing a layer comprising multiple sub-layers by melting, extruding and joining the separate layers. In a presently preferred embodiment the laminated multi-layer is melted or fused with the compartment that receives and/or holds the food. Preferably, the laminated multi-layer is provided on a food contact surface of the compartment to improve shelf-life of the food.

In a presently preferred embodiment the packaging unit comprises a layer of biodegradable aliphatic polyester on a food contact surface to improve melting and/or fusing of the laminated multi-layer thereon. This provides a good connection between the compartment and the laminated multi-layer and also maintains the compostability properties of the packaging unit according to the invention. Actually, such optional layer of biodegradable material functions as binder for the connection between the laminated multi-layer and the packaging unit. This also improves the strength and stability of the laminated multi-layer and the packaging unit as a whole. The thickness of this thin layer is preferably in the range of 1 to 100 µm.

Alternatively, or in addition thereto, the laminated multi-layer is melted and protrudes into and/or is integrated in the moulded or fluff pulp material matrix. This provides the material matrix of the packaging unit with the desired properties.

By providing a heating step the melting and/or fusing of the laminated multi-layer to the biodegradable aliphatic polyester fibres in the moulded or fluff pulp material is further improved. In fact, the heating step improves the adherence/connection of the laminated multi-layer to the packaging unit. This heating step can be performed in a press that pushes the laminated multi-layer into the correct shape onto the food contact surface. Alternatively, in one of the presently preferred embodiments of the invention, the laminated multi-layer is provided inside the mould wherein the package unit is manufactured from the moulded pulp material. The laminated multi-layer is provided in the mould onto the packaging unit. The food packaging unit with the laminated multi-layer can be dried in the mould involving a so-called in-mould drying operation or can alternatively be dried in an additional separate drying step after releasing the product from the mould.

In addition, or as an alternative, spray coating can be applied to improve the water and/or fat repellence. Preferably, an emulsion is spraid on the packaging unit that builds a thin film layer in the processing of the packaging unit.

Optionally, the laminated multi-layer is provided applying pre-stress to the laminated multi-layer. In another embodiment, to reduce the risk of providing a laminated multi-layer with reduced thickness in the corners of the packaging unit, the laminated multi-layer is designed and shaped according to the desired dimensions and thereafter provided to the packaging unit. This may involve cutting the design of the laminated multi-layer and folding it onto the food contact surface. Thereafter, in one of the presently preferred embodiments, the heating step is performed to melt or fuse the materials together.

Many food packaging units are provided with a cover or seal or film to cover the compartment with the food product(s). A further problem with conventional food packaging units relates to such top seal film that needs to be disposed separately from the other part(s) of the packaging unit. This requires attention when disposing the packaging unit and/or increases the risk of mixed waste streams.

According to a preferred embodiment of the invention the packaging unit may comprise a biodegradable top seal film. Providing such biodegradable top seal film provides a fully biodegradable and compostable packaging unit for food products. This enhances disposal possibilities for the material, thereby obviating the risk of mixed waste streams. Furthermore, it reduces the amount of residual waste. This signifantly improves the sustainability of the food packaging industry.

Preferably, the packaging unit is provided with a circumferential edge comprising a connecting surface for the top seal film that is substantially free of the laminated multi-layer.

Such edge or alternative connecting surface enables the adherence of the top seal film to the compartments of the packaging unit. In some embodiments packaging units are provided with a (transparent) seal, foil, film, sheet or liner closing the opening of the packaging unit. In fact, this layer acts as a closure to the packaging unit. The use of a biodegradable aliphatic polyester such as PBS and/or PLA in packaging units contributes to the adherence of this closure to the packaging unit. In fact the biodegradable aliphatic polyester (partly) acts as an adhesive or glue.

It was shown that this contributes to the hot seal peelability, i.e. removing the transparent layer after the packaging unit is heated in a microwave for example, and/or to the cold seal peelability, i.e. removing the transparent layer when taking the packaging unit from the fridge and before heating for example.

Optionally, a thin layer of biodegradable aliphatic polyester is provided to adhere the transparent layer to the edge of the packaging unit. Preferably, the transparent layer is also home compostable. In a presently preferred embodiment the transparent layer comprises an amount or mixture of PBS, PHBT and/or PLA. Optionally, a thin anti-fog layer is provided to improve the transparency of the layer. Also optionally, the transparent layer comprises an amount of PVOH to improve the performance in relation to the O₂-permeability. This can advantageously be applied to packaging units for meat and meat products, for example.

In a presently preferred embodiment of the invention the top seal film also comprises one or more biodegradable aliphatic polyesters. This may improve the adherence of the top seal film to the laminated multi-layer and/or to the moulded or fluff pulp material. Optionally, a separate adherence layer is provided.

In one of the presently preferred embodiments of the invention the thickness of the individual layers is within the range of 1.5-50 µm, preferably in the range of 1.5-30 µm, and wherein the total thickness of the laminated multi-layer is in the range of 20-150 µm. These layers provide a laminated multi-layer having an acceptable thickness and providing effective barrier properties, for example.

In one of the presently preferred embodiments of the invention the functional layer has a thickness in the range of 1.5-10 µm and is most preferably in the range of 3-5 µm. The intermediate layers have a thickness that is preferably also in the range of 1.5-10 µm and most preferably in the range 1.5-3 µm for an individual layer. The inner and outer cover layer have a thickness that is preferably in the range of 20-50 µm, more preferably in the range of 20-40 µm. It will be understood that different combinations of layers and thicknesses can be made. It is presently preferred to have a total thickness of the biodegradable multi-layer in the range of 23-70 µm, more preferably in the range of 30-60 µm, even more preferably in the range of 30-50 µm, and most preferably a thickness of about 40 µm.

In a further presently preferred embodiments the functional layer has a thickness in the range of 1.5-10 µm and is most preferably in the range of 3-5 µm. The intermediate layers have a thickness that is preferably also in the range of 1.5-10 µm and most preferably in the range 1.5-3 µm for an individual layer. The inner and outer cover layer have a thickness that is preferably in the range of 20-50 µm, more preferably in the range of 30-40 µm. It will be understood that different combinations of layers and thicknesses can be made. It is presently preferred to have a total thickness of the biodegradable multi-layer in the range of 70-100 µm, more preferably in the range of 70-90 µm, and most preferably a thickness of about 80 µm. Experiments have shown an effective barrier, especially an oxygen barrier, having a lower weight that can be applied cost effectively. In embodiments of packaging units with a top seal film, this top seal film is preferably provided with a similar multi-layer construction and a thickness in the range of 25-100 µm, more preferably in the range of 30-50 µm. The thickness of the intermediate and functional layers is preferably similar to the multi-layer, while the inner and outer cover layers are provided with a reduced thickness. In a number of applications the reduced thickness of the top seal film as compared to the laminated multi-layer is possible because the top seal film does not need to be deep-drawn in the manufacturing process.

In a further preferred embodiment of the invention the amount of biodegradable aliphatic polyester in the food packaging unit is in the range of 0.5-20 wt.%, more preferably in the range of 1-15 wt.%.

By applying an amount of biodegradable aliphatic polyester in one of the aforementioned ranges, the sustainability and packaging characteristics of the food packaging unit according to the present invention is significantly improved. The biodegradable aliphatic polyester is provided in the laminated multi-layer and/or in the matrix of the moulded or fluff pulp material and/or as a separate layer on the compartment.

In a further preferred embodiment of the invention the amount of biodegradable aliphatic polyester is in the range of 2-10 wt.%, preferably in the range of 5-9 wt.%, and most preferably in the range of 6.5-8 wt.%.

Applying an amount of biodegradable aliphatic polyester in these ranges provides packaging units that are both stable and strong.

Another advantage when using a biodegradable aliphatic polyester in a food packaging unit is the constancy of size or dimensional stability.

As a further advantage of the use of a biodegradable aliphatic polyester, the so-called heat seal ability of the packaging unit is improved. This further improves food packaging characteristics.

An even further advantage of introducing an amount of a biodegradable aliphatic polyester in a food packaging unit is that the properties of the packaging unit can be adjusted by mixing or blending the main biodegradable aliphatic polyester with other polymers or agents. Also, it is possible to prepare the biodegradable aliphatic polyester material for (paper) coating and printing. Furthermore, in some embodiments, digital printing may be applied to the laminated trays to reduce the total cost of the packaging unit. This further improves the sustainability of the packaging unit. Also, a paper look may be achieved.

As mentioned earlier, the food packaging unit may comprise one or more further agents in addition to the use of biodegradable aliphatic polyester. This enables a specific design of the food packaging unit characteristics and properties according to customer's specifications or needs taking into account the specific food product.

Preferably, the biodegradable aliphatic polyester comprises an amount of one or more of PBS, PHB, PHA, PCL, PLA, PGA, PHBH and PHBV. Preferably, the use of biodegradable aliphatic polyester is combined with the use of further additives or substances that aim at improving or achieving specific properties of the packaging unit. In further presently preferred embodiments the bio-polymers that are applied originate from so-called non-gmo (non-genetically modified organisms) biopolymers. For example, it was shown that the use of PLA in addition to another biodegradable aliphatic polyester may improve the strength and stability of the packaging unit, thereby providing a stronger packaging unit and/or requiring less raw material.

According to one of the preferred embodiments of the invention the biodegradable aliphatic polyester comprises an amount of PHBH. Experiments showed an improved temperature behaviour improving manufacturing possibilities by providing an acceptable behaviour up to 200 °C and even up to 220 °C.

According to one of the alternatively preferred embodiments of the invention the biodegradable aliphatic polyester comprises an amount of polybutylene succinate (PBS). PBS is one of the biodegradable aliphatic polyesters. PBS can also be referred to as polytetramethylene succinate. PBS decomposes naturally into water, CO₂ and biomass. The use of PBS as a compostable material contributes to providing a sustainable product.

The use of PBS is possible in food-contact applications including food packaging units from a moulded pulp material. An advantage of the use of PBS is that the decomposition rate of PBS is much higher as compared to other agents or components such as PLA (including variations thereof such as PLLA, PDLA and PLDLLA, for example).

Therefore, the use of PBS in a food packaging unit from moulded pulp significantly improves the sustainability of the packaging unit. This improves recycling possibilities and biodegrading or decomposing the packaging unit. For example, the use of PBS in lid seals may obviate the need for non compostable PE as inner liner.

In a further preferred embodiment of the invention the laminated multi-layer comprises a colouring agent.

By providing a colouring agent the visual appearance of the packaging unit of the invention can be improved. Furthermore, this can be used to provide a consumer with additional information. For example, Indian meals can be provided in a red coloured packaging unit and Italian food can be provided in a green coloured packaging unit. It will be understood that these examples can be extended to other exchanges of information with a consumer.

Preferably, the colouring agent is biodegradable and more preferably compostable. This maintains the packaging unit as a whole being biodegradable or even compostable.

Optionally, in addition or as an alternative, a colouring agent is added to the moulded or fluff pulp, preferably a soluble dye. These agents can be cationic or anionic and are in another classification also referred to as basic dyes, direct dyes or acid dyes. In a presently preferred embodiment cationic colouring agents are used. Optionally, the moulded or fluff pulp material can be coloured using additives, dyes (basic dyes, direct dyes, anionic and/or cationic charged dyes), pigments or other components that provide colour to the packaging unit. This enables providing the packaging unit with a colour representative for its (intended) contents.

In a further preferred embodiment of the invention the laminated multi-layer comprises a print. By providing a laminated multi-layer with a print the possibilities to provide a consumer with additional information or extended print.

In a presently preferred embodiment a print is provided on the pulp material oriented side of the laminated multi-layer in a mirror image such that the print can be seen from the (other) food side of the laminated multi-layer. This reduces the risk of the printing ink to come in contact with the food.

The food packaging unit according to the invention is biodegradable as a whole. More preferably, the unit is biodegradable at a temperature in the range of 5 to 60 °C, preferably in the range of 5-40 °C, more preferably in the range of 10-30 °C , even more preferably in the range of 15-25 °C , and most preferably at a temperature of about 20 °C. This renders decomposing of the packaging unit easier. Furthermore, this enables so-called ambient or at home decomposing of the packaging unit according to the invention. For example, the packaging unit according to the invention may be industrial and/or home compostable according to EN 13432.

Tests with a packaging unit in an embodiment of the invention showed a home compostability wherein the packaging unit decomposed within 24 weeks in accordance with the accepted practical standard.

Optionally, the biodegradable aliphatic polyester, such as PBS, can be manufactured from fossil resources. More preferably, the biodegradable aliphatic polyester, such as PBS, is bio-based and made from plant resources, for example. Such bio based biodegradable aliphatic polyester, such as PBS, further improves the sustainability of the food packaging unit.

In a further embodiment of the present invention the packaging unit further comprises an amount of natural and/or alternative fibers.

Providing an amount of natural and/or alternative fibers provides a natural feel to the packaging unit and/or improves the overall strength and stability of the packaging unit. Such natural/alternative fibers may comprise fibers from different origin, specifically biomass fibers from plant origin. This biomass of plant origin may involve plants from the order of Poales including grass, sugar cane, bamboo and cereals including barley and rice. Other examples of biomass of plant origin are plants of the order Solanales including tomato plants of which the leaves and/or stems could be used, for example plants from the Order Arecales including palm oil plants of which leaves could be used, for example plants from the Order Maphighiales including flax, plants from the Order of Rosales including hemp and ramie, plants from the Order of Malvales including cotton, kenaf and jute. Alternatively, or in addition, biomass of plant origin involves so-called herbaceous plants including, besides grass type plants and some of the aforementioned plants, also jute, Musa including banana, Amarantha, hemp, cannabis etcetera. In addition or as an alternative, biomass material origination from peat and/or moss can be applied.

Preferably, the (lignocellulosic) biomass of plant origin comprises biomass originating from plants of the Family of Poaceae (to which is also referred to as Gramineae). This family includes grass type of plants including grass and barley, maize, rice, wheat, oats, rye, reed grass, bamboo, sugar cane (of which residue from the sugar processing can be used that is also referred to as bagasse), maize (corn), sorghum, rape seed, other cereals, etc. Especially the use of so-called nature grass provides good results when manufacturing packaging units such as egg packages. Such nature grass may originate from a natural landscape, for example. This family of plants has shown good manufacturing possibilities in combination with providing a sustainable product to the consumer.

Preferably, in one of the embodiments of the invention the packaging unit comprises an amount of micro fibrillated cellulose (MFC) sometimes also referred to as nanofibrillar cellulose or cellulose nanofibers. MFC preferably originates from cellulose raw material of plant origin. The use of MFC enhances the fiber-fiber bond strength and further improves the reinforcement effect. Although MFC is preferably applied in combination with one or more of the biodegradable aliphatic polyesters, it is also possible to use MFC as an alternative to these components.

In an embodiment of the invention the bio-polymers and/or MFC provide a biofilm on or at (a part of) the surface of the packaging unit. Experiments indicate that good barrier properties can be achieved. Alternatively, or in addition thereto, a paper look and/or paper feel surface layer can be provided. For example, a paper layer can be sealed onto a thin layer of (bio)film or a thin layer of biofilm or biopolymer can be coated or laminated onto the paper layer. The biopolymer layer can be sealed onto the surface of a tray or container for food, for example. This paper look and/or paper feel surface layer contributes to the consumer's appreciation of the packaging unit according to such embodiment of the invention. Tests have shown a good wet strength and barrier properties. Barrier properties may include oxygen and/or grease barriers. It is believed that the oxygen barrier properties are achieved by the ability of MFC to form a dense network involving hydrogen bonds.

Optionally, some hydrophobic elements are added to an MFC layer to further improve the water barrier properties. This may involve modification of the hydroxyl groups, for example on the surface of the micro fibrils chemically and/or by absorption of polymers, for example.

A further advantage of the use of MFC is the improved printability, including digital printing possibilities. In addition or as an alternative, MFC may reduce cost by reducing the weight or grammage by increasing the amount of fillers. This may also enhance the optical properties.

It will be understood that combinations of MFC and/or biodegradable aliphatic polyesters may further improve the mentioned effects and advantages. Also, combinations with conventional polymer films, for example by coating MFC and/or a biodegradable aliphatic polyester thereon, may provide a product with the advantages of both types of material.

The present invention further relates to a method for manufacturing a food packaging unit from a moulded pulp material, the method comprising the steps of:
- preparing an amount of moulded or fluff pulp material;
- providing a laminated multi-layer comprising:
   - an inner cover layer comprising an amount of a biodegradable aliphatic polyester;
   - a first intermediate layer of a biodegradable material for connecting and/or sealing adjacent layers;
   - a functional layer comprising a vinyl alcohol polymer;
   - a second intermediate layer of a biodegradable material for connecting and/or sealing adjacent layers; and
   - an outer cover layer comprising an amount of a biodegradable aliphatic polyester,
- manufacturing the food packaging unit with the laminated multi-layer to provide a food packaging unit that is a compostable food packaging unit.

Such method provides the same effects and advantages as described in relation to the food packaging unit. In accordance with the invention the laminated multi-layer can be provided before or after releasing the food packaging unit from the mould. In a presently preferred embodiment the laminated multi-layer is co-extruded with the moulded pulp material and thereafter deep-drawn into the desired shape of the packaging unit. In another presently preferred embodiment the layer is provided in an in-mould operation, preferably in combination with an in-mould drying operation.

In a further preferred embodiment the method comprises the additional step of subjecting the packaging unit to a heating step heating the packaging unit to a temperature about the melting temperature of the biodegradable aliphatic polyester to crosslink/interact with the laminated multi-layer to increase strength and improve barrier properties. Preferably, the heating step heats the temperature of the packaging unit to a heating temperature in the range of 145-195 °C, preferably in the range of 165-190 °C, and most preferably to a temperature of about 180 °C.

In a further preferred embodiment of the invention the manufacturing comprises the step of refining at least a part of the fibers of the moulded or fluff pulp material. It was shown that a higher degree of refining results in more and/or stronger bonding between the fibers. This increases strength of the packaging unit and/or reduces its weight. Preferably, the refining of the moulded or fluff pulp material is performed together with the biodegradable aliphatic polyester. The refining step improves the mixing of the materials and fibrillates the fibers. Refining the fibers may reduce fiber length, fibrillates fibers thereby providing more specific surface of fiber branches that improves binding and H-bridge formation which leads to a stronger, stiffer product. In fact, this improves the number and strength of connections between the moulded or fluff pulp material and the biodegradable aliphatic polyester such that the overall strength and stability of the packaging unit is improved. This is even further improved when combining the refining step with the heat treatment step to activate the biodegradable aliphatic polyester.

In a preferred embodiment of the invention the packaging unit may be negatively charged, for example in or after the refining step. To enhance the adherence of the laminated multi-layer and/or top seal film an ionisation step can be performed to remove, or at least reduce, the negative charge.

By adding an amount of biodegradable aliphatic polyester to the moulded or fluff pulp material, a packaging unit can be manufactured from a blend comprising fibers and biodegradable aliphatic polyester, and/or a separate layer comprising biodegradable aliphatic polyester, can be achieved. Such separate or additional layer may improve the fusing or melting process.

The method according to the invention provides a food packaging unit that is more sustainable than conventional packaging units that are moulded for food products. Optionally, other bio-material can be used in combination with the main biodegradable aliphatic polyester, such as starch and other polyesters like PBS, PLA or similar biodegradable components. Such combinations or alternatives may provide similar effects and advantages as described in relation to the packaging unit.

Preferably, in the moulding step of the food packaging unit, the biodegradable aliphatic polyester connects to the celluloid fibres of the moulded pulp material. This provides a food packaging unit with sufficient strength. In a presently preferred embodiment these connections are achieved by activation of the biodegradable aliphatic polyester. This may involve subjecting the packaging unit to about the melting temperature of the biodegradable aliphatic polyester, for example 145-175 °C. More specifically, the biopolymers melt and crosslink/interact with the laminated multi-layer to increase strength and change properties like barrier properties.

In some of the presently preferred embodiments the method further comprises the step of providing a top seal film, preferably a biodegradable and/or compostable top seal film.

In one of the presently preferred embodiments, the method further comprises the step of performing (dry) sterilisation and pasteurisation on the (filled) packaging units. Especially, in combination with the (O₂)-barrier properties of the laminated multi-layer (and top seal film) the shelf-life of the food product is significantly improved. In addition, the O₂-barrier prevents or at least reduces oxidation processes in the food and thereby contributes to the maintenance of food taste.

In the life cycle of the packaging unit, in the context of the present invention, the manufacturing process of the food packaging unit preferably also comprises the step of biodegrading the packaging unit. Therefore, in relation to the present invention, preferably also the biodegradation of the packaging unit is considered part of the entire manufacturing process. The biodegradation constitutes a significant part of the life cycle in view of the sustainability.

Preferably, the biodegrading comprises decomposing the food packaging unit.

Even more preferably, the decomposing is performed at a temperature in the range of 5-40 °C, preferably in the range of 10-30 °C, more preferably in the range of 15-25 °C, and most preferably at a temperature of about 20 °C, thereby relating to ambient decomposing.

In presently preferred embodiments the bio-polymers that are applied originate from so-called non-gmo (non-genetically modified organisms) biopolymers.

In some of the preferred embodiments the method further comprises the steps of refining fibers for the moulded or fluff pulp material and/or adding an amount of natural fibers. This provides the same or similar effects and advantages as were described in relation to the packaging unit.

Further advantages, features and details of the invention are elucidated on the basis of preferred embodiments thereof, wherein reference is made to the accompanying drawings, in which:
- Figure 1A and 1B show a packaging unit configured for receiving a food product according to the present invention
- Figure 1C and 1D show an alternative packaging unit according to the present invention;
- Figure 1E shows a detail of the laminated multi-layer;
- Figure 2 shows a plate as food receiving product according to the invention;
- Figure 3A and 3B shows a packaging unit according to the invention comprising PBS and/or another biodegradable aliphatic polyester;
- Figure 4 shows an example of an alternative food packaging product according to the present invention;
- Figure 5 shows further packaging units for a bottle divider according to the present invention; and
- Figure 6A and 6B show further packaging units according to the invention;
- Figure 7A and 7B show a packaging unit for eggs according to the invention; and
- Figure 8 shows experimental results with conventional packaging units and.packaging units according to the present invention.

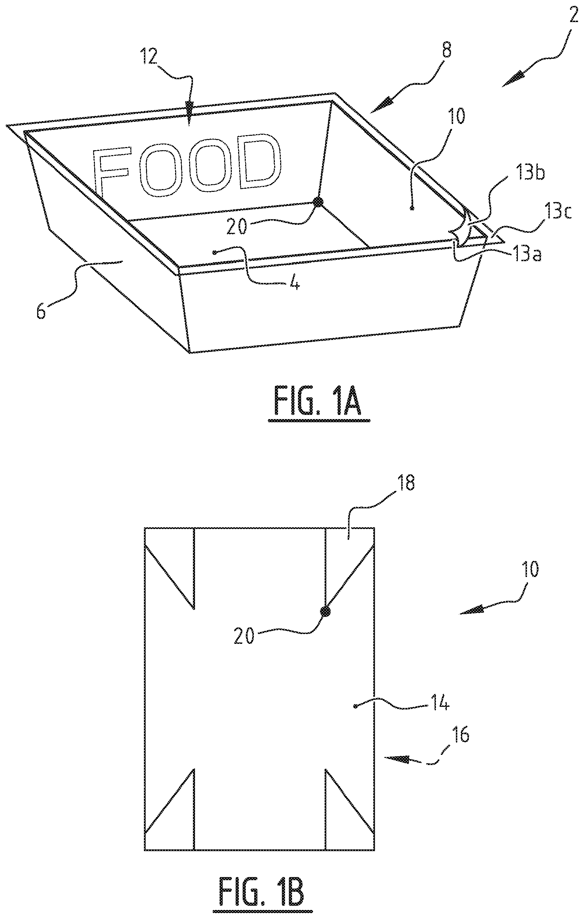

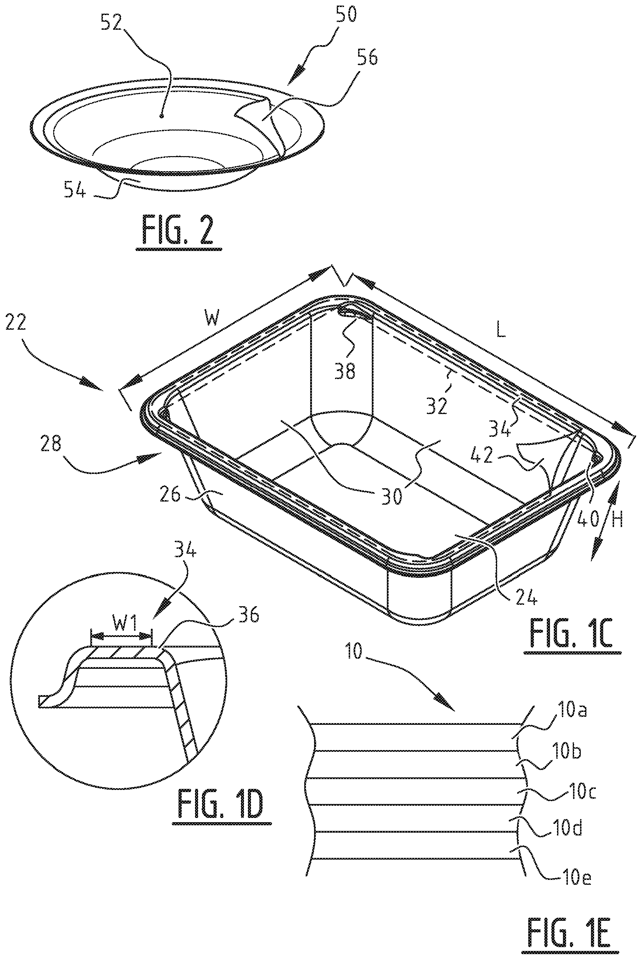

Packaging unit 2 (figure 1A) relates to a food receiving container having bottom part 4 and side walls 6 defining opening 8. On the inside of container 2 there is provided laminated multi-layer 10 comprising a compostable vinyl alcohol polymer. In the illustrated embodiment layer 10 comprises print 12. Preferably, in the illustrated embodiment the print is provided on the back side of laminated multi-layer 10.

In the illustrated embodiment container 2 is provided with peelable top seal film 13a (figure 1A) is provided. Edge 13b is shown as peeled from edge 13c of container 2. In this embodiment top seal film 13a is shown as transparent film. It will be understood that film 13a can also be provided as non-transparent, or alternatively as semi-transparent and/or partly transparent. Alternatively container 2 can also be provided without top seal film 13a.

In an illustrated embodiment, laminated multi-layer 10 (figure IB) comprises a food oriented side 14 and a packaging side 16. In the illustrated embodiment parts 18 can be removed or cut from sheet or layer 10 to dimension laminated multi-layer 10 according to the specifications and enable providing layer 10 into the inside of container 2. This enables positioning laminated multi-layer 10 correctly relative to corners 20. In this illustrated embodiment print 12 is provided in a mirror image on package side 16 of laminated multi-layer 10 to render the render print 12 visible for a user or consumer.

Packaging unit 22 (figure 1C) provides a further embodiment of a food receiving container having bottom part 24 and side walls 26 defining opening 28. Packaging unit 22 has length L, width W and height H. On the inside of container 22 there is provided laminated multi-layer 30, optionally comprising a print. In the illustrated embodiment laminated multi-layer 30 is provided on the inside of packaging unit 22 and extends from bottom part 24 up to contour or edge 32. Contour or edge 32 is provided a small distance from the upper side of edge 34. This distance is preferably in the range of 1 to 12 mm. Edge 34 (figure ID) is provided with width W1 that defines contact surface 36 for connecting to liner or seal 33 that is schematically illustrated. In the illustrated embodiment this liner or seal 33 is connected directly to the moulded pulp material, optionally with an adhesive, in stead of being connected to laminated multi-layer 30. Such adhesive preferably comprises an amount of biodegradable polyester, for example PLA. Width W1 is in the illustrated embodiment in the range of 1 to 15 mm, preferably in the range of 2 to 5 mm.

Packaging unit 22 (figure 1C) comprises first denesting elements 38 and second denesting elements 40. In the illustrated embodiment denesting elements 38, 40 enable denesting of a stack of packaging units 22. Denesting elements 38, 40 are designed asymmetrically. It will be understood that alternative denesting elements can also be envisaged in accordance with the present invention as alternatives or in combination. These alternative denesting elements can be designed asymmetrically or symmetrically. Asymmetrical denesting elements enable denesting with packaging units 22 in one orientation and disable or at least render denesting more difficult in another orientation. Denesting elements 38, 40 have as an additional advantage that these elements do not significantly change the size of contact surface 36 and/or the internal volume of packaging unit 22. In the illustrated embodiment, denesting elements 38, 40 are provided at or adjacent edge 34. This prevents the provision of marks, edges, protrusions, nocks and the like on or close to bottom part 24. Such irregularities on or close to bottom part 24 hinders cleaning or emptying packaging unit 22. In the illustrated embodiment, optional top seal film 42 is provided.

Laminated multi-layer 10 (figure IE) comprises first cover layer 10a, first intermediate layer 10b, central functional layer 10c, second intermediate layer 10d, and second cover layer 10e. it will be understood that other layers can be added to multi-layer 10. It will be understood that lamintated multi-layer 10 can be applied to container 2, and also to packaging unit 22 and more specifically the food contact surfaces of bottom part 24 and side walls 26 thereof.

In another embodiment plate 50 (figure 2) is on the food receiving side provided with laminated multi-layer 52. In the illustrated embodiment bottom or back side 54 of plate 50 is not provided with such laminated multi-layer. Optionally, plate 50 is provided with top seal film 56, for example in case of plate 50 holding a salade or soup. It will be understood that also other food products can be held by plate 50. Multi-layer 52 is preferably similar to multi-layer 10 that was already illustrated.

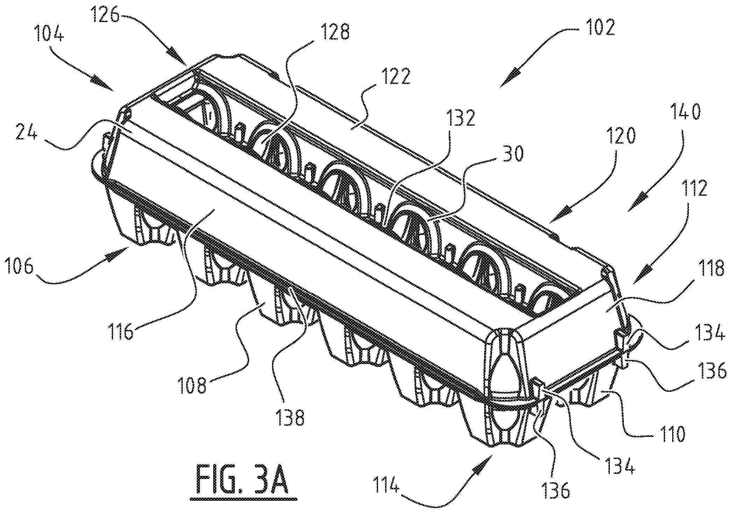

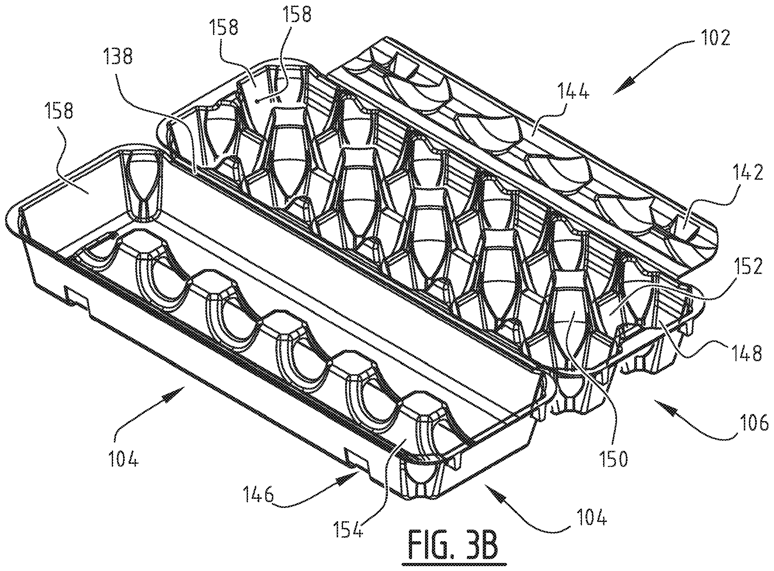

Packaging unit 102 (figure 3A and B) carries or holds eggs and comprises cover part 104 and bottom part 106. In the illustrated embodiment packaging unit 102 comprises laminated multi-layer 101. Multi-layer 101 is preferably similar to multi-layer 10 that was already illustrated. Bottom part 106 is provided with back surface 108, sides 110 and front surface 112, and bottom surface 114. Cover part 104 is provided with back surface 116, side surfaces 118, front surface 120 and top surface 122. In the illustrated embodiment transition 124 is provided between top surface 122 and back and front surfaces 116, 120.

In the illustrated embodiment, top surface 122 of cover part 104 is provided with groove 126 comprising a number of openings 128. Openings 128 are defined by two adjacent arch-shaped edges 130, 132 having a larger thickness as compared to the average thickness of cover part 104.

Side surfaces 118 of cover part 104 are provided with denest nocks or denest elements 134. In the illustrated embodiment, bottom part 106 is provided with similar elements 136 mirroring denest elements 134. Hinge 138 connects back surface 116 of cover part 104 with back surface 108 of bottom part 106. Lock 140 comprises nose-shaped lock element 142 that is connected to flap 144 of bottom part 106. Cover part 104 is provided with openings 146 that capture lock elements 142 therewith defining lock 140.

In the illustrated embodiment, bottom part 106 is provided with a number of product receiving compartments 148, cones 150 and separating walls 152. Cone 150 extends from the bottom of bottom part 106 in an upward direction. Cover part 104 comprises cone support 154. Inner surface 158 of packaging unit 102 comprises PBS and/or PLA material, optionally as film layer or alternatively blended and/or integrated with the fibres of the moulded pulp material.

In the illustrated embodiment, packaging unit 102 comprises twelve product receiving compartments 48 that are provided in two rows of six compartments 148. Individual compartments 48 are separated from each other by walls 152 and cones 150. It will be understood that other configurations can also be envisaged in accordance to the invention.

Packaging unit 102 may also be configured to receive other products, such as tomatoes, kiwis.

It will be understood that other types of food packaging units can also be envisaged in accordance with the present invention.

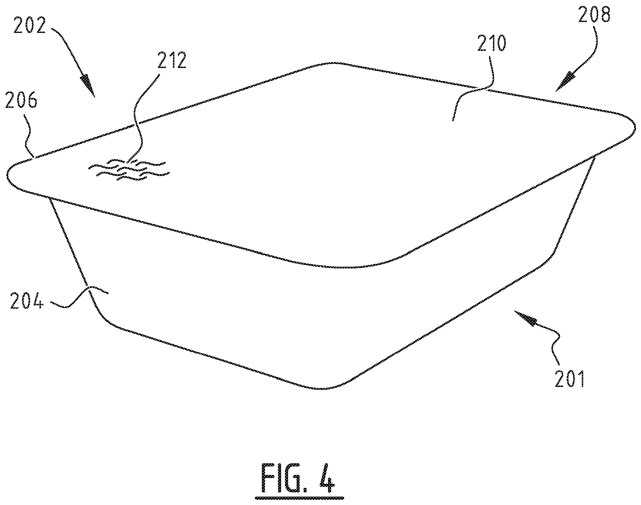

Packaging unit 202 (Figure 4) comprises laminated multi-layer 201 that is provided on bottom part 204 and cover part 206. Multi-layer 201 is preferably similar to multi-layer 10 that was already illustrated. Unit 202 is provided with biodegradable aliphatic polyester, such as PBS and/or PLA, and is capable of holding an amount of ice cream. Cover part 206 comprises top seal 208 of a layer or film 210 of biodegradable aliphatic polyester(s), wherein optionally a (paper) label is provided. Optionally, fibers 212 are included in the cover part 206. This improves the possibilities for giving the unit a natural paper feel and/or look. This may also be applied to other type of packaging units. For example, in instant or ready-to-eat meals, such that conventional sleeves can be omitted from the packaging units. This enables a more cost-efficient packaging unit with a possible weight reduction.

Packaging unit 202 has numerous applications, including but not limited to, airplane meals. Such meals are provided to the airplane after (dry) sterilisation and pasteurisation. In combination with the (O₂)-barrier properties of the laminated multi-layer (and top seal film) the shelf-life of the food product is significantly improved. In addition, the O₂-barrier prevents or at least reduces oxidation processes in the food and thereby contributes to the maintenance of food taste.

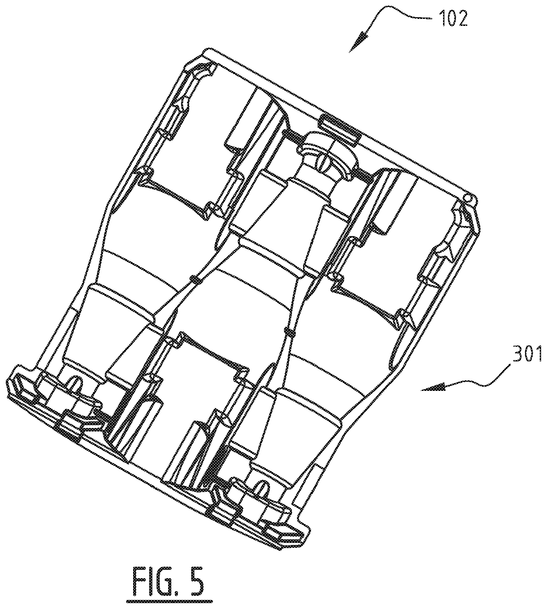

As a further example, bottle divider 302 (Figure 5) is illustrated with laminated multi-layer 301. Multi-layer 301 is preferably similar to multi-layer 10 that was already illustrated. Also, bottle divider 102 may comprise an additional film layer of PBS (and/or appropriate alternative biodegradable aliphatic polyester) and/or may comprise an amount of PBS that is blended into the moulded pulp.

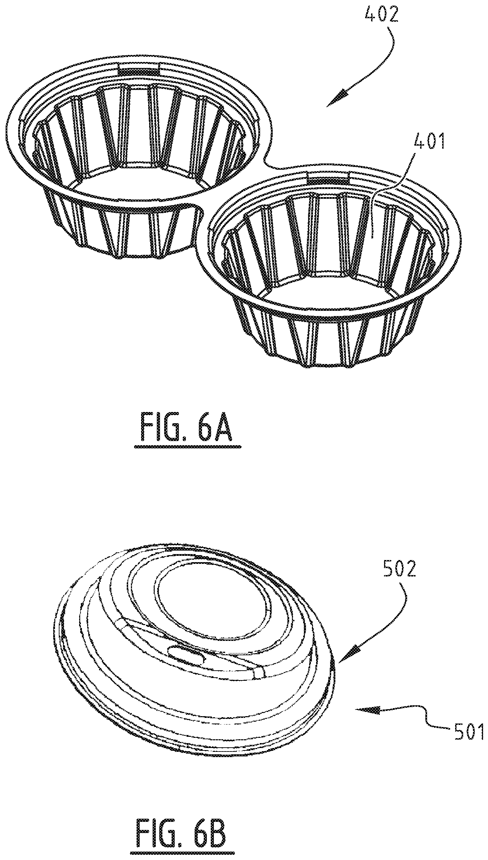

A further example in accordance with the present invention is cover 402, for example for an ice cup (Figure 6A) that is provided with laminated multi-layer 401. Another example of a packaging unit according to the invention is sip lid 502 (Figure 6B) that is provided with laminated multi-layer 501. Multi-layers 401, 501 are preferably similar to multi-layer 10 that was already illustrated. Cover 402 and sip lid 502 comprise an additional film layer of biodegradable aliphatic polyester and/or may comprise an amount of biodegradable aliphatic polyester that is blended into the moulded pulp. This renders cover 402 and sip lid 502 water or liquid repellent and/or improves the heating step to melt or fuse laminated multi-layer 401, 501 on or to cover 402 and/or sip lid 502. One of the further advantages of the use of biodegradable aliphatic polyester is the reduction or prevention of the liquid entering or migrating into the sip lid material during use. Another advantage is the constancy of size or dimensional stability. In this specific case this prevents sip lid 502 loosening from a cup or beaker for hot beverages such as coffee, tea or soup, or cold beverages such as carbonated drinks, and cup 402 from loosing from an ice cup, for example. It will be understood that such lids 502 can also be applied to other food containers. For example, lids 502 can be applied to containers for milkshakes, for example. Further details and examples of lids 502 are disclosed in WO 2010/064899, including embodiments with specific flanges and notches.

Sip lid 502 is preferably coated with a biodegradable aliphatic polyester liner, such as a PBS liner in addition to laminated multi-layer 501 to improve the melting properties. As mentioned, sip lids 502 can be used for cups and milkshakes. Also, sip lids can be applied to so-called ready meal trays (for example for pizza, wraps, fish, meat, lobster, pasta, ...) and act as a (digital) printable and barrier seal, for example.

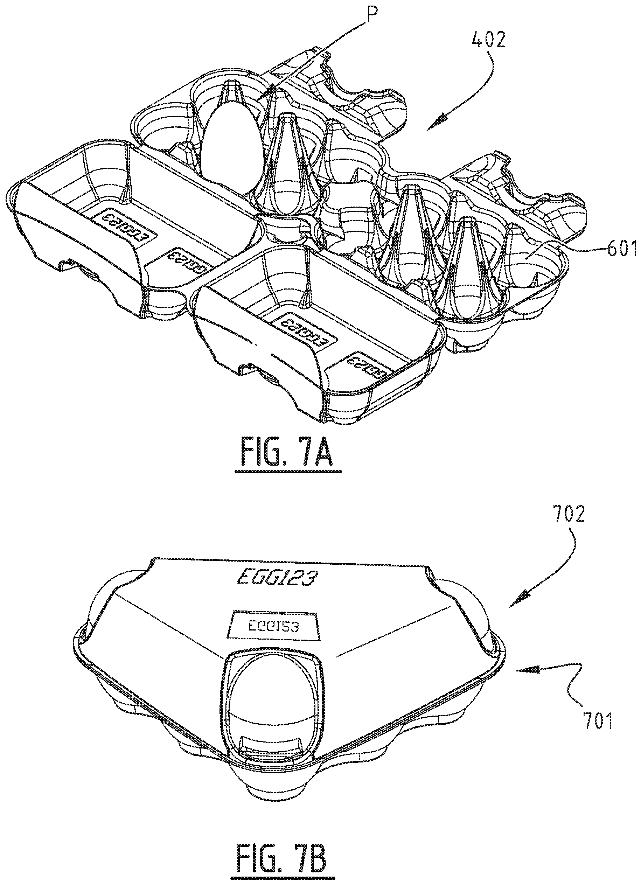

It will be understood that other designs for packaging units in accordance with the invention can be envisaged. For example, containers 602, 702 (Figure 7A and B) illustrate different designs for egg cartons capable of holding eggs P and comprise laminated multi-layer 601, 701. Multi-layers 601, 701 are preferably similar to multi-layer 10 that was already illustrated.

Other examples of food packaging products may relate to cup carriers, cups, plates and other table ware etc.

When manufacturing a food packaging unit 2, 50, 102, 202, 302, 402, 502, 602 a moulded pulp material is prepared. Optionally, an amount of biodegradable aliphatic polyester, such as PBS and/or PHBH, is blended or mixed into the moulded pulp material and/or an amount of biodegradable aliphatic polyester, such as PBS and/or PHBH is included in a separate layer that is provided in or on unit 2, 50, 102, 202, 302, 402, 502, 602. Such separate layer may improve the contact with laminated multi-layer 10, 52, 101, 201, 301, 401, 501, 601 optionally comprising a vinyl alcohol polymer, such as HAVOH and/or BVOH. Preferably, laminated multi-layer is co-extruded with the moulded pulp material and deep-drawn. In addition, or as an alternative, the raw unit is moulded. Optionally, the raw unit is dried in the mould applying an in-mould drying process. In such alternative embodiment laminated multi-layer 10, 52, 101, 201, 301, 401, 501, 601 is provided in the mould and a heating step is performed. Optionally, an additional layer of biodegradable aliphatic polyester is provided to improve the contact between the packaging unit and the laminated multi-layer. Finally the product is released from the mould.

Several post-drawing or post-moulding operations may optionally be performed in relation to unit 2, 50, 102, 202, 302, 402, 502, 602 optionally including, but not limited to, labelling including in-mould labelling, marking including printing and digital printing, testing. In several of the preferred embodiments, the compostable laminated multi-layer 10, 52, 101, 201, 301, 401, 501, 601 is at least arranged on the food contact area of the product containing part of the packaging unit. In preferred embodiments this film is capable of being used in a microwave or oven as a so-called ovenable film. Preferably, layer 10, 52, 101, 201, 301, 401, 501, 601 is capable of withstanding temperatures up to 170 °C, 190 °C, or even higher. The biodegradable aliphatic polyester preferably comprises an amount of PBS and/or MFC and/or biodegradable aliphatic polyester that may comprise an amount of one or more of PHB, PHA, PCL, PLA, PGA, PHBH and PHBV. Especially a combination of a compostable packaging unit involving extrusion and/or in-mould drying further improves the sustainability as compared to conventional packaging units. The (digital) printable properties enable printing of packaging and/or food characteristics/information. This may obviate the use of separate sleeves, for example. In addition, it enables the application of prints, for example a fish&chips (newspaper) print on the packaging unit.

Experiments have been performed with one or more of the illustrated food packaging units that were provided with laminated multi-layer 10, 52, 101, 201, 301, 401, 501, 601. These experiments involved comparing the "in-use" characteristics of the food packaging units as compared to conventional packaging units, and also the compostable characteristics. An amount of a biodegradable aliphatic polyester was added to the moulded pulp material and a refining step was performed. Measurements were done at a temperature of about 23 °C and a relative humidity of about 50%. Measurements involved a compression test. This showed a significant improvement in compression value. For example, a packaging unit with 7.5% PLA and a refining step showed a compression value of 450-500 N, while for a similar conventional product under the same conditions this value is about 180 N. Even a sub-optimal conditions of RH about 90% the compression value for the packaging unit according to the invention was about 250-270 N, thereby still outperforming the conventional product at its optimal conditions.

In a further test the multi-layer was applied to the food packaging unit and for 24 hours exposed to 23 °C and a relative humidity of about 50%. No oxygen penetration was detected.

Other tests were performed to show the dual ovenable (oven and microwave) performance of the packaging unit according to the invention. In the experiments the laminated product was heated to a temperature of about 190 °C for about 30 minutes. Results show that the film layer remains intact and does not melt. No leakage was detected. Furthermore, the strength and stability of the packaging unit were not significantly affected. As a further effect, the packaging unit was more stable in view of twisting when removing the packaging unit from the oven as is often the case with conventional packaging units. Furthermore, the packaging unit of the invention showed a limited temperature increase to about 50-70 °C, while the conventional units reached a temperature of about 90-100 °C under similar conditions. Other experiments with a (food) tray shows an even improved heat resistance when heating the tray to a temperature of 180-200 °C, and in addition shows (an improved) oil, acid and moisture resistance/repellence.

Other test were performed to show the performance of the packaging unit according to the invention by heating the packaging unit in an oven and/or microwave. In the experiments the laminated product, comprising a laminated layer with a total thickness of about 40 µm, was heated to a temperature of about 180 °C for about 35 minutes. Results show that the film layer remains intact and does not melt. No leakage was detected. Furthermore, the strength and stability of the packaging unit were not significantly affected. As a further effect, the packaging unit was more stable in view of twisting when removing the packaging unit from the oven as is often the case with conventional packaging units. Leaking of the film layer was tested by using food simulantia such as 95% ethanol, modified polyphenylene oxide (MPPO), 2,2,4-trimethylpentane, and the like. Thus, this test showed a safe use of the laminate product as packaging, for example food packaging.

Additional tests compared the temperature on the outside of the product packaging after cooking ("cool to touch") with different types of meals by heating in both the microwave and oven between a conventional packaging unit from CPET (Crystalline Polyethylene Terephthalate) and a packaging unit that is about 100% biodegradable and made from moulded fibre. The cooking instructions for the ready meals were:
- Microwave: 5 minutes at 700 Watt;
- Oven: 30 minutes at 180°C (air heated).

For the measurements, an IR (infrared) thermometer was used to observe the temperature on the outside of different parts of each tray/ packaging unit.

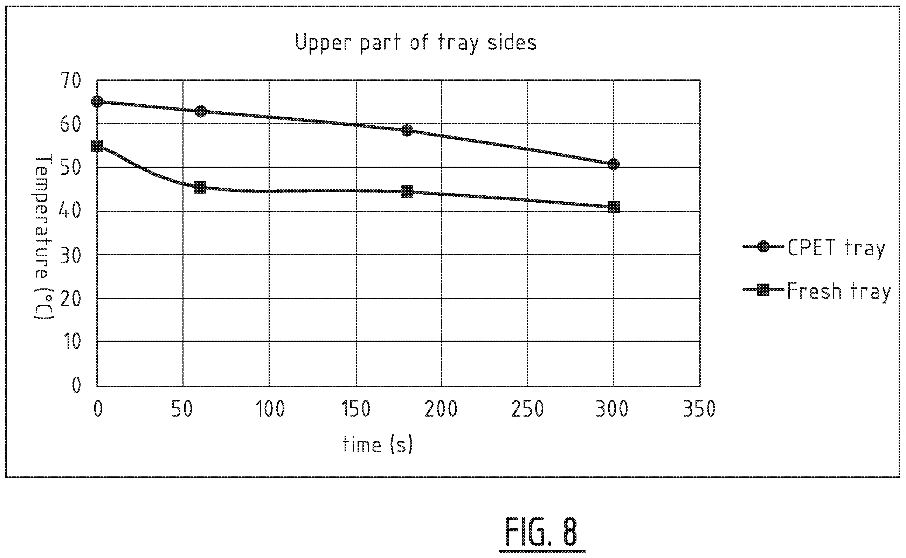

Temperature of the food trays was measured regularly, starting directly after being taken out of the oven/microwave. Results for temperatures at the upper part of the trays are shown in Figure 8 and are representative for the entire packaging units.

Results clearly show a substantial temperature difference in the range of 10-15°C showing that the packaging unit according to the invention is cooler when being touched by a user. Food temperatures are similar in both packaging units during the entire time period. During the experiments it was observed that the CPET trays became "wobbly"/unstable after heating. In addition, the biodegradable packaging unit has a weight that is about 10% lower as compared to the CPET tray, while outperforming this CPET tray.

In still further tests other characteristics were examined. It was shown that wipeability of the packaging unit could be improved. Further improvements where shown by addition of further additives.

Also, shelf-life tests were performed. In these tests a packaging unit with a laminated multi-layer and top seal film according to the invention is compared to a conventional packaging unit for fresh meals. Tests revealed a significant shelf-life increase from about 8 days to 12 days. The present invention is by no means limited to the above described preferred embodiments thereof. The rights sought are defined by the following claims, within the scope of which many modifications can be envisaged.

## Claims

1. Food packaging unit (2, 22, 50, 102, 202, 302, 402, 502, 602, 702) from a moulded or fluff pulp material, the packaging unit comprising a food receiving and/or carrying compartment that comprises a biodegradable laminated multi-layer (10, 30, 52, 101, 201, 301, 401, 501, 601, 701), with the multi-layer comprising:
- an inner cover layer (10a) comprising an amount of a biodegradable aliphatic polyester;
- a first intermediate layer (10b) of a biodegradable material for connecting and/or sealing adjacent layers;
- a functional layer (10c) comprising a vinyl alcohol polymer;
- a second intermediate layer (10d) of a biodegradable material for connecting and/or sealing adjacent layers; and
- an outer cover layer (10e) comprising an amount of a biodegradable aliphatic polyester, and
wherein the food packaging unit is a compostable food packaging unit.

2. Food packaging unit according to claim 1, wherein the laminated multi-layer is a co-extruded laminated multi-layer.

3. Food packaging unit according to claim 1 or 2, wherein the laminated multi-layer is melted or fused with the compartment, wherein the packaging unit preferably comprises a layer of biodegradable aliphatic polyester on a food contact surface to improve melting or fusing of the laminated multi-layer thereon.

4. Food packaging unit according to one of the foregoing claims, wherein the laminated multi-layer is melted in the moulded or fluff pulp material matrix.

5. Food packaging unit according to one of the foregoing claims, further comprising a biodegradable top seal film (13a, 42, 56, 208) for covering the food receiving or carrying compartment, wherein the packaging unit preferably comprises a circumferential edge (34) comprising a connecting surface (36) for the top seal film that is substantially free of the laminated multi-layer and/or wherein the top seal film preferably comprising a biodegradable aliphatic polyester.

6. Food packaging unit according to one of the foregoing claims, wherein the thickness of the individual layers is within the range of 5-50 µm, preferably in the range of 5-30 µm, and wherein the total thickness of the laminated multi-layer is in the range of 20-150 µm.

7. Food packaging unit according to one of the foregoing claims, wherein the amount of biodegradable aliphatic polyester in the food packaging unit is in the range of 0.5-20 wt.%, more preferably in the range of 1-15 wt.%, wherein the amount of biodegradable aliphatic polyester in the food packaging unit is even more preferably in the range of 2-10 wt.%, even further more preferably in the range of 5-9 wt.%, and most preferably in the range of 6.5-8 wt.%.

8. Food packaging unit according to one of the foregoing claims, wherein the biodegradable aliphatic polyester comprises an amount of one or more of PBS, PHB, PHA, PCL, PLA, PGA, PHBH and PHBV, wherein the biodegradable aliphatic polyester preferably comprises an amount of PHBH.

9. Food packaging unit according to one of the foregoing claims, wherein the laminated multi-layer comprises a colouring agent that is biodegradable and more preferably compostable and/or wherein the biodegradable aliphatic polyester is bio-based and/or further comprising an amount of natural and/or alternative fibers (212).

10. Food packaging unit according to one of the foregoing claims, wherein the unit is biodegradable at a temperature in the range of 5 to 60 °C, preferably in the range of 5 to 40 °C, more preferably in the range of 10 to 30 °C, even more preferably in the range of 15 to 25 °C, and most preferably at a temperature of about 20 °C.

11. Method for manufacturing a food packaging unit (2, 22, 50, 102, 202, 302, 402, 502, 602, 702) from a moulded or fluff pulp material according to one of the foregoing claims, the method comprising the steps of:
- preparing an amount of moulded or fluff pulp material;
- providing a laminated multi-layer (10, 30, 52, 101, 201, 301, 401, 501, 601, 701) comprising:
- an inner cover layer (10a) comprising an amount of a biodegradable aliphatic polyester;
- a first intermediate layer (10b) of a biodegradable material for connecting and/or sealing adjacent layers;
- a functional layer (10c) comprising a vinyl alcohol polymer;
- a second intermediate layer (10d) of a biodegradable material for connecting and/or sealing adjacent layers; and
- an outer cover layer (10e) comprising an amount of a biodegradable aliphatic polyester,
- manufacturing the food packaging unit with the laminated multi-layer to provide a food packaging unit that is a compostable food packaging unit.

12. Method according to claim 11, wherein providing the laminated multi-layer comprises the step of co-extruding the layers and/or wherein the laminated multi-layer is melted or fused with the compartment.

13. Method according to claim 11 or 12, further comprising the step of providing a biodegradable top seal film (13a, 42, 56, 208).

14. Method according to any of claims 11-13, further comprising the step of performing (dry) sterilisation and pasteurisation of the packaging units and/or further comprising the step of refining fibers for the moulded or fluff pulp material and/or further comprising the step of adding an amount of natural fibers.

15. Method according to any of claims 11-14, further comprising the step of biodegrading the packaging unit, wherein biodegrading preferably comprises decomposing the food packaging unit, and wherein the decomposing is preferably performed at a temperature in the range of 5 to 40 °C, preferably in the range of 10 tot 30 °C, more preferably in the range of 15 to 25 °C, and most preferably at a temperature of about 20 °C.

## Patentansprüche

1. Lebensmittelverpackungseinheit (2, 22, 50, 102, 202, 302, 402, 502, 602, 702) aus einem geformten oder flockigen Zellstoffmaterial, mit einem Fach zur Aufnahme und/oder zum Transport von Lebensmitteln, welches eine biologisch abbaubare laminierte mehrlagige Schicht (10, 30, 52, 101, 201, 301, 401, 501, 601, 701) aufweist, bestehend aus:
- einer inneren Deckschicht (10a), die eine Menge eines biologisch abbaubaren aliphatischen Polyesters enthält;
- einer ersten Zwischenschicht (10b) aus einem biologisch abbaubaren Material zum Verbinden und/oder Versiegeln benachbarter Schichten;
- einer Funktionsschicht (10c), die ein Vinylalkoholpolymer enthält;
- einer zweiten Zwischenschicht (10d) aus einem biologisch abbaubaren Material zum Verbinden und/oder Versiegeln benachbarter Schichten; und
- einer äußeren Deckschicht (10e), die eine Menge eines biologisch abbaubaren aliphatischen Polyesters enthält, wobei die Lebensmittelverpackungseinheit eine kompostierbare Lebensmittelverpackungseinheit darstellt.

2. Lebensmittelverpackungseinheit nach Anspruch 1, wobei die laminierte mehrlagige Schicht eine koextrudierte laminierte mehrlagige Schicht darstellt.

3. Lebensmittelverpackungseinheit nach Anspruch 1 oder 2, wobei die laminierte mehrlagige Schicht mit dem Fach geschmolzen oder verschmolzen wird, wobei die Verpackungseinheit vorzugsweise auf einer mit dem Lebensmittel in Kontakt kommenden Fläche eine Schicht aus biologisch abbaubarem aliphatischem Polyester aufweist, um auf dieser das Schmelzen oder Verschmelzen der laminierten mehrlagigen Schicht zu verbessern.

4. Lebensmittelverpackungseinheit nach einem der vorherigen Ansprüche, wobei die laminierte mehrlagige Schicht in der geformten oder flockigen Zellstoff-Materialmatrix geschmolzen wird.

5. Lebensmittelverpackungseinheit nach einem der vorherigen Ansprüche, ferner aufweisend eine biologisch abbaubare verschließende Abdeckfolie (13a, 42, 56, 208) zum Abdecken des zur Aufnahme und/oder zum Transport von Lebensmitteln dienenden Fachs, wobei die Verpackungseinheit vorzugsweise einen umlaufenden Rand (34) aufweist, der eine Verbindungsfläche (36) für die verschließende Abdeckfolie darstellt und auf der sich im Wesentlichen keine laminierte mehrlagige Schicht befindet und/oder wobei die verschließende Abdeckfolie vorzugsweise aus einem biologisch abbaubaren aliphatischen Polyester besteht.

6. Lebensmittelverpackungseinheit nach einem der vorherigen Ansprüche, wobei die Dicke der einzelnen Schichten im Bereich von 5 bis 50 µm, vorzugsweise im Bereich von 5 bis 30 µm, liegt und wobei die Gesamtdicke der laminierten mehrlagigen Schicht im Bereich von 20 bis 150 µm liegt.

7. Lebensmittelverpackungseinheit nach einem der vorherigen Ansprüche, wobei die Menge an biologisch abbaubarem aliphatischem Polyester in der Lebensmittelverpackungseinheit im Bereich von 0,5 bis 20 Gew.-%, vorzugsweise im Bereich von 1 bis 15 Gew.-% liegt, noch bevorzugter im Bereich von 2 bis 10 Gew.-%, noch weiter bevorzugt im Bereich von 5 bis 9 Gew.-% und am meisten bevorzugt im Bereich von 6,5 bis 8 Gew.-% liegt.

8. Lebensmittelverpackungseinheit nach einem der vorherigen Ansprüche, wobei der biologisch abbaubare aliphatische Polyester eine Menge von einem oder mehreren Polyestern der Gruppe PBS, PHB, PHA, PCL, PLA, PGA, PHBH und PHBV aufweist, vorzugsweise eine Menge an PHBH.

9. Lebensmittelverpackungseinheit nach einem der vorherigen Ansprüche, wobei die laminierte mehrlagige Schicht einen Farbstoff aufweist, der biologisch abbaubar und vorzugsweise kompostierbar ist, und/oder wobei der biologisch abbaubare aliphatische Polyester auf biologischer Basis beruht und/oder weiterhin eine Menge an natürlichen und/oder alternativen Fasern (212) aufweist.

10. Lebensmittelverpackungseinheit nach einem der vorherigen Ansprüche, wobei die Einheit bei einer Temperatur im Bereich von 5 bis 60 °C, vorzugsweise im Bereich von 5 bis 40 °C, noch bevorzugter im Bereich von 10 bis 30 °C, noch weiter bevorzugt im Bereich von 15 bis 25 °C und am meisten bevorzugt bei einer Temperatur von etwa 20 °C biologisch abbaubar ist.

11. Verfahren zur Herstellung einer Lebensmittelverpackungseinheit (2, 22, 50, 102, 202, 302, 402, 502, 602, 702) aus einem geformten oder flockigen Zellstoffmaterial nach einem der vorherigen Ansprüche, wobei das Verfahren die folgenden Schritte aufweist:
- Herstellen einer Menge an geformtem oder flockigem Zellstoffmaterial;
- Bereitstellen einer laminierten mehrlagigen Schicht (10, 30, 52, 101, 201, 301, 401, 501, 601, 701), bestehend aus:
- einer inneren Deckschicht (10a), die eine Menge eines biologisch abbaubaren aliphatischen Polyesters enthält;
- einer ersten Zwischenschicht (10b) aus einem biologisch abbaubaren Material zum Verbinden und/oder Versiegeln benachbarter Schichten;
- einer funktionellen Schicht (10c), die ein Vinylalkoholpolymer aufweist;
- einer zweiten Zwischenschicht (10d) aus einem biologisch abbaubaren Material zum Verbinden und/oder Versiegeln benachbarter Schichten; und
- einer äußeren Deckschicht (10e), die eine Menge eines biologisch abbaubaren aliphatischen Polyesters enthält;
- Herstellen der Lebensmittelverpackungseinheit mit der laminierten mehrlagigen Schicht, um eine Lebensmittelverpackungseinheit bereitzustellen, die eine kompostierbare Lebensmittelverpackungseinheit darstellt.

12. Verfahren nach Anspruch 11, wobei das Bereitstellen der laminierten mehrlagigen Schicht den Schritt des Koextrudierens der Schichten umfasst und/oder wobei die laminierte mehrlagige Schicht mit dem Fach geschmolzen oder verschmolzen wird.

13. Verfahren nach Anspruch 11 oder 12, das ferner den Schritt des Bereitstellens einer biologisch abbaubaren verschließenden Abdeckfolie (13a, 42, 56, 208) aufweist.

14. Verfahren nach einem der Ansprüche 11 bis 13, ferner aufweisend den Schritt der (trockenen) Sterilisierung und Pasteurisierung der Verpackungseinheiten und/oder den Schritt der Veredelung von Fasern für das geformte oder flockige Zellstoffmaterial und/oder den Schritt der Zugabe einer Menge an Naturfasern.

15. Verfahren nach einem der Ansprüche 11 bis 14, ferner aufweisend den Schritt des biologischen Abbaus der Verpackungseinheit, wobei der biologische Abbau vorzugsweise die Zersetzung der Lebensmittelverpackungseinheit umfasst, und wobei die Zersetzung vorzugsweise bei einer Temperatur im Bereich von 5 bis 40 °C, vorzugsweise im Bereich von 10 bis 30 °C, noch bevorzugter im Bereich von 15 bis 25 °C und am meisten bevorzugt bei einer Temperatur von etwa 20 °C erfolgt.

## Revendications

1. Unité d'emballage alimentaire (2, 22, 50, 102, 202, 302, 402, 502, 602, 702) provenant d'un matériau de pâte moulé ou en flocons, l'unité d'emballage comprenant un compartiment de réception et/ou de transport d'aliments qui comprend une multicouche stratifiée (10, 30, 52, 101, 201, 301, 401, 501, 601, 701) biodégradable, avec la multicouche comprenant :
- une couche de couverture intérieure (10a) comprenant une quantité d'un polyester aliphatique biodégradable ;
- une première couche intermédiaire (10b) d'un matériau biodégradable pour relier et/ou sceller des couches adjacentes ;
- une couche fonctionnelle (10c) comprenant un alcool polyvinylique ;
- une seconde couche intermédiaire (10d) d'un matériau biodégradable pour relier et/ou sceller des couches adjacentes ; et
- une couche de couverture extérieure (10e) comprenant une quantité d'un polyester aliphatique biodégradable, et
dans laquelle l'unité d'emballage alimentaire est une unité d'emballage alimentaire compostable.

2. Unité d'emballage alimentaire selon la revendication 1, dans laquelle la multicouche stratifiée est une multicouche stratifiée coextrudée.

3. Unité d'emballage alimentaire selon la revendication 1 ou 2, dans laquelle la multicouche stratifiée est fondue ou amalgamée avec le compartiment, dans laquelle l'unité d'emballage comprend de préférence une couche de polyester aliphatique biodégradable sur une surface pour contact alimentaire pour améliorer la fusion ou l'amalgame de la multicouche stratifiée sur celle-ci.

4. Unité d'emballage alimentaire selon l'une des revendications précédentes, dans laquelle la multicouche stratifiée est fondue dans la matrice de matériau de pâte moulée ou en flocons.

5. Unité d'emballage alimentaire selon l'une des revendications précédentes, comprenant en outre un film de scellement supérieur biodégradable (13a, 42, 56, 208) pour couvrir le compartiment de réception ou de transport d'aliments, dans laquelle l'unité d'emballage comprend de préférence un bord circonférentiel (34) comprenant une surface de liaison (36) pour le film de scellement supérieur qui est sensiblement exempte de la multicouche stratifiée et/ou dans laquelle le film de scellement supérieur comprend de préférence un polyester aliphatique biodégradable.

6. Unité d'emballage alimentaire selon l'une des revendications précédentes, dans laquelle l'épaisseur des couches individuelles est dans la plage de 5 à 50 µm, de préférence dans la plage de 5 à 30 µm, et dans laquelle l'épaisseur totale de la multicouche stratifiée est dans la plage de 20 à 150 µm.

7. Unité d'emballage alimentaire selon l'une des revendications précédentes, dans laquelle la quantité de polyester aliphatique biodégradable dans l'unité d'emballage alimentaire est dans la plage de 0,5 à 20 % en poids, plus préférablement dans la plage de 1 à 15 % en poids, dans laquelle la quantité de polyester aliphatique biodégradable dans l'unité d'emballage alimentaire est encore plus préférablement dans la plage de 2 à 10 % en poids, bien plus préférablement encore dans la plage de 5 à 9 % en poids, et de manière préférée entre toutes dans la plage de 6,5 à 8 % en poids.

8. Unité d'emballage alimentaire selon l'une des revendications précédentes, dans laquelle le polyester aliphatique biodégradable comprend une quantité d'un ou plusieurs parmi PBS, PHB, PHA, PCL, PLA, PGA, PHBH et PHBV, dans laquelle le polyester aliphatique biodégradable comprend de préférence une quantité de PHBH.

9. Unité d'emballage alimentaire selon l'une des revendications précédentes, dans laquelle la multicouche stratifiée comprend un colorant qui est biodégradable et plus préférablement compostable et/ou dans laquelle le polyester aliphatique biodégradable est biosourcé et/ou comprenant en outre une quantité de fibres naturelles et/ou alternatives (212).

10. Unité d'emballage alimentaire selon l'une des revendications précédentes, dans laquelle l'unité est biodégradable à une température dans la plage de 5 à 60 °C, de préférence dans la plage de 5 à 40 °C, plus préférablement dans la plage de 10 à 30 °C, encore plus préférablement dans la plage de 15 à 25 °C, et de manière préférée entre toutes à une température d'environ 20 °C.

11. Procédé pour fabriquer une unité d'emballage alimentaire (2, 22, 50, 102, 202, 302, 402, 502, 602, 702) provenant d'un matériau de pâte moulé ou en flocons selon l'une des revendications précédentes, le procédé comprenant les étapes consistant à :
- préparer une quantité de matériau de pâte moulé ou en flocons ;
- fournir une multicouche stratifiée (10, 30, 52, 101, 201, 301, 401, 501, 601, 701) comprenant :
- une couche de couverture intérieure (10a) comprenant une quantité d'un polyester aliphatique biodégradable ;
- une première couche intermédiaire (10b) d'un matériau biodégradable pour relier et/ou sceller des couches adjacentes ;
- une couche fonctionnelle (10c) comprenant un alcool polyvinylique ;
- une seconde couche intermédiaire (10d) d'un matériau biodégradable pour relier et/ou sceller des couches adjacentes ; et
- une couche de couverture extérieure (10e) comprenant une quantité d'un polyester aliphatique biodégradable,
- fabriquer l'unité d'emballage alimentaire avec la multicouche stratifiée pour fournir une unité d'emballage alimentaire qui est une unité d'emballage alimentaire compostable.

12. Procédé selon la revendication 11, dans lequel la fourniture de la multicouche stratifiée comprend l'étape consistant à coextruder les couches et/ou dans lequel la multicouche stratifiée est fondue ou amalgamée avec le compartiment.

13. Procédé selon la revendication 11 ou 12, comprenant en outre l'étape consistant à fournir un film de scellement supérieur biodégradable (13a, 42, 56, 208).

14. Procédé selon l'une quelconque des revendications 11 à 13, comprenant en outre l'étape consistant à réaliser une stérilisation (à sec) et une pasteurisation des unités d'emballage et/ou comprenant en outre l'étape consistant à raffiner des fibres pour le matériau de pâte moulé ou en flocons et/ou comprenant en outre l'étape consistant à ajouter une quantité de fibres naturelles.

15. Procédé selon l'une quelconque des revendications 11 à 14, comprenant en outre l'étape consistant à dégrader biologiquement l'unité d'emballage, dans lequel la dégradation biologique comprend de préférence la décomposition de l'unité d'emballage alimentaire, et dans lequel la décomposition est de préférence réalisée à une température dans la plage de 5 à 40 °C, de préférence dans la plage de 10 à 30 °C, plus préférablement dans la plage de 15 à 25 °C, et de manière préférée entre toutes à une température d'environ 20 °C.
